# EUROPÄISCHE PATENTSCHRIFT

(11) **EP 1 955 581 B1**
(45) Veröffentlichungstag und Bekanntmachung des Hinweises auf die Patenterteilung: **21.07.2010**
(21) Anmeldenummer: 08002403.7
(22) Anmeldetag: 08.02.2008
(51) Int. Cl.: A01D 41/00, B60B 11/02, B60B 29/00, B62D 49/00

(54) **Vorrichtung zum Montieren und Demontieren von zusätzlichen Rädern an Arbeitsfahrzeugen**
Device for fitting or unfitting additional tyres on a commercial vehicle
Dispositif de montage et de démontage de roues supplémentaires sur des véhicules de travail

(30) Priorität: 12.02.2007 DE 102007007376
(43) Veröffentlichungstag der Anmeldung: 13.08.2008
(73) Patentinhaber: Holmer Maschinenbau GmbH, 84069 Eggmühl (DE)
(72) Erfinder: Forster, Erhard, 84069 Schierling (DE)
(74) Vertreter: Graf, Helmut

(56) Entgegenhaltungen:
- DE-A1- 2 358 734
- FR-A- 2 610 873
- US-A- 2 380 313
- US-A- 2 695 717
- US-A- 4 976 449

## Beschreibung

Die Erfindung bezicht sich auf eine Vorrichtung gemäß Oberbegriff Patentanspruch 1.

Eine solche Vorrichtung ist aus der gattungsgemäßen FR 2 610 873 A bekannt.

Es ist bekannt, an Arbeitsfahrzeugen, beispielsweise an selbstfahrenden Erntefahrzeugen für das Fahren im Gelände bzw. auf nicht befestigtem Untergrund an den, am Arbeitsfahrzeug bzw. den dortigen Fahrzeugachsen bereits vorhandenen, d.h. fahrzeugeigenen Rädern, mit denen auch ein Fahren auf öffentlichen Wegen und Straßen zulässig ist, zusätzlich Räder vorzusehen, und zwar in der Weise, dass die fahrzeugeigenen Räder und die zusätzlichen Räder jeweils eine mehrere Räder, beispielsweise zwei Räder aufweisende Radanordnung bilden.

Bekannt ist speziell auch eine Vorrichtung mit den Merkmalen des Oberbegriffs des Patentanspruches 1, die zum Montieren und Demontieren von zusätzlichen Rädern an Arbeitsfahrzeugen verwendet werden kann und hierfür aus einem auf einem Untergrund fest aufstehenden Rahmen und aus einer auf dem Rahmen horizontal oder im wesentlichen horizontal verschiebbaren Radaufnahme besteht, die von einem Schlitten gebildet ist, auf dem das jeweilige Rad aufsteht.

Bekannt ist weiterhin ein Transportwagen (US-A-4 976 449) zum Transportieren von Fahrzeugrädern.

Das Anbringen und Abnehmen der zusätzlichen Räder muss in der Regel am Einsatzort erfolgen, da sich durch die zusätzlichen Räder eine Fahrzeugbreite ergibt, die die für ein Fahren auf öffentlichen Wegen und Straßen zulässig maximale Fahrzeugbreite überschreitet.

Aufgabe der Erfindung ist es, eine Vorrichtung aufzuzeigen, mit der das Anbringen und Abnehmen von zusätzlichen Rädern an Arbeitsfahrzeugen wesentlich vereinfacht wird.

Zur Lösung dieser Aufgabe ist eine Vorrichtung entsprechend dem Patentanspruch 1 ausgebildet

In Weiterbildung der Erfindung kann die Vorrichtung u.a. auch so ausgebildet sein, dass die wenigstens eine Radaufnahme relativ zu der Montageposition am Rahmen bewegbar vorgesehen ist,
und/oder
dass die wenigstens eine Radaufnahme zumindest in einer horizontalen oder annähernd horizontalen Achsrichtung bewegbar am Rahmen vorgesehen ist,
und/oder
dass die Radaufnahme einen Halter für wenigstens zwei zusätzliche Räder aufweist,
und/oder
dass die Radaufnahme oder deren Halter für ein Halten der zusätzlichen Räder an ihren Radfelgen ausgebildet sind,
und/oder
dass die Radaufnahme oder deren Halter für ein freies Halten der zusätzlichen Räder ausgebildet sind,
und/oder
dass das jeweilige zusätzliche Rad an der Radaufnahme oder an dem Halter dieser Aufnahme frei gehalten bzw. entlastet an das fahrzeugeigene Rad ankuppelbar bzw. von diesem abnehmbar ist,
und/oder
wenigsten eine die Arbeitsposition definierende Standfläche am Rahmen für das jeweilige in der Arbeitsposition befindliche fahrzeugeigene Rad gebildet ist,
und/oder
dass im Arbeitszustand der Vorrichtung sich die wenigstens eine Standfläche auf dem Untergrund abstützt,
und/oder
dass die wenigstens eine Standfläche von wenigstens einem Rampenelement gebildet ist,
und/oder
dass die Vorrichtung beim Anbringen oder Abnehmen des jeweiligen zusätzlichen Rades mit ihrer längserstreckung, beispielsweise mit der Längserstreckung ihres Rahmens parallel oder im Wesentlichen parallel zu der betreffenden Fahrzeugachse des Arbeitsfahrzeugs orientiert ist,
und/oder
dass am Rahmen der Vorrichtung beidseitig von wenigstens einer Standfläche für zwei an einer gemeinsamen Fahrzeugachse des Fahrzeugs vorgesehene fahrzeugeigene Rädern jeweils eine Radaufnahme vorgesehen ist,
und/oder
dass die wenigstens eine Radaufnahme auf die Montageposition oder auf die diese Montageposition bildende Standfläche zu bewegbar und von dieser Montageposition bzw. Standfläche wegbewegbar ist,
und/oder
dass der Halter der wenigstens einen Radaufnahme für die Aufnahme von zwei mit ihren Achsen parallel zueinander und vorzugsweise achsgleich miteinander angeordneten zusätzlichen Rädern ausgebildet ist,
und/oder
dass die Standfläche von wenigstens zwei Rampenelementen gebadet ist,
und/oder
dass an einem Ende des Rahmens eine Zugdeichsel zum Ankoppeln an ein Zugfahrzeug vorgesehen ist,
und/Udef
dass der Rahmen der Vorrichtung in seiner effektiven Länge veränderbar ist,
und/oder
dass die Länge des Rahmens durch Klappen veränderbar ist,
und/oder
dass der Rahmen aus wenigstens zwei gelenkig miteinander verbundenen Rahmenelementen besteht, die bei im Arbeitszustand befindlicher Vorrichtung in Rahmenlängsrichtung aneinander anschließen und bei im Transportzustand befindlicher Vorrichtung quer zur Längsrichtung der Vorrichtung, beispielsweise in vertikaler Richtung oder annähernd in vertikaler Richtung orientiert sind,
und/oder
dass der Rahmen teleskopierbar ist,
wobei die vorgenannten Merkmale jeweils einzeln oder in beliebigen Kombinationen vorgesehen sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im folgenden anhand der Figuren an einem Ausführungsbeispiel näher erläutert. Es zeigen:
- Fig. 1: in vereinfachter schematicher Darstellung eine Vorrichtung gemäß der Erfindung in Seitenansicht und in einem Transportzustand, d.h. in einem Betriebszustand für das Verfahren auf öffentlichen Straße und Wegen;
- Fig. 2: die Vorrichtung der Figur 1. in einem Arbeitszustand zum Montieren und Demontieren von zusätzlichen Rädern an ein bzw. von einem Arbeitsfahrzeug, zusammen mit dem Arbeitsfahrzeug;
- Fig. 3: eine Draufsicht auf die Darstellung der Figur 2.

In den Figuren ist 1 ein zweiachsiges, selbstfahrendes Arbeitsfahrzeug, welches im Arbeitseinsatz in einem Gelände Außerhalb öffentlicher Wege und Straßen bewegt wird, beispielsweise ein selbstfahrendes Erntefahrzeug. Das Arbeitsfahrzeug 1 ist an seinen Achsen, von denen wenigstens eine Achse angetrieben und wenigstens eine Achse lenkbar ist, jeweils mit zwei Rädern 2 versehen, die in üblicher Weise aus einer Radfelge und Luftbereifung bestehen. Die Räder 2 besitzen insbesondere hinsichtlich Durchmesse und Breite die bei Arbeitsfahrzeugen, insbesondere auch bei Erntefahrzeugen übliche Größe. Der Abstand der Räder 2 jeder Achse ist so gewählt ist, dass die für ein Fahren auf öffentlichen Wegen und Straßen zulässige maximale Fahrzeugbreite nicht überschritten wird und das Arbeitsfahrzeug 1 somit über öffentliche Straßen und Wege an den jeweiligen Einsatzort bewegt werden kann.

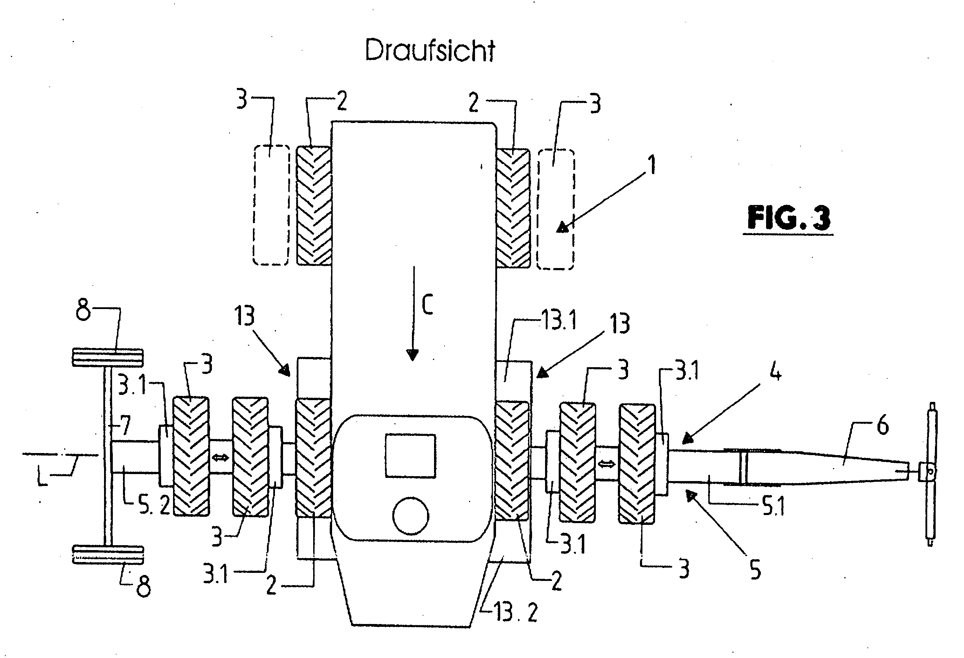

Um ein Fahren im freien Gelände, speziell auch auf einem Feld oder einem anderen Gelände mit weichem, nicht befestigtem Untergrund UG zu ermöglichen, ist es bekannt, am Verwendungsort des Arbeitsfahrzeuges 1 an die bereits an den Radachsen vorhandenen Räder 2 jeweils wenigstens ein weiteres Rad 3 anzudocken, sodass die Radachsen dann jeweils zwei Zwillingsradanordnungen aufweisen, wie dies in der Figur 3 mit unterbrochenen Linien für die hintere Radachse des Arbeitsfahrzeugs 1 angedeutet ist. Die zusätzlichen Räder 3 besitzen dabei den gleichen Durchmesser wie die fahrzeugeigenen Räder 2 und eine Radbreite, die beispielsweise ebenfalls gleich der Breite der fahrzeugeigenen Räder 2 oder aber größer ist.

Um die Bereitstellung der zusätzlichen Räder 3 am jeweiligen Einsatzort des Arbeitsfahrzeugs 1, das Anbringen und Abnehmen der zusätzlichen Räder 3 an das bzw. vor dem Arbeitsfahrzeug 1 usw. zu erleichtern, ist eine fahrbare Vorrichtung 4 vorgesehen, die bei der dargestellten Ausführungsform als einachsiger, an ein Zugfahrzeug ankoppelbarer Anhänger ausgebildet ist. Die Vorrichtung 4 besteht hierfür aus einem in den Figuren allgemein mit 5 bezeichneten Fahrzeugrahmen, der an seinem vorderen Ende eine Fahrzeugdeichsel 6 zum Ankoppeln an das nicht dargestelltes Zugfahrzeug und seinem hinteren Ende eine Radachse 7 mit zwei Rädern 8 aufweist.

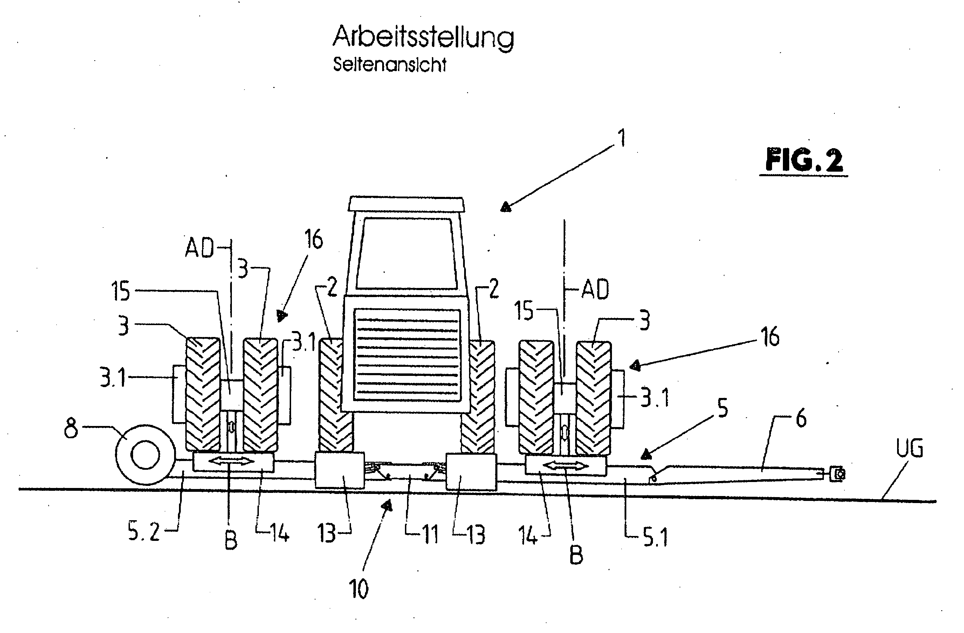

Der Rahmen 5 besteht bei der dargestellten Ausführungsform aus einem vorderen, mit der Zugdeichsel 6 verbundenen Rahmenelement 5.1 und aus einem rückwärtigen, die Radachse 7 aufweisenden Rahmenelement 5.2. Die Zugdeichsel 6 ist über ein Gelenk 9 gelenkig mit dem vorderen Ende des Rahmenelementes 5.1 verbunden, und zwar schwenkbar um eine Achse parallel zur Radachse 7. Über ein weiteres Gelenk 10 sind die Rahmenelemente 5.1 und 5.2 gelenkig miteinander verbunden, sodass die Vorrichtung 4 bzw. deren Rahmen 5 aus einem Arbeitszustand, in dem die Rahmenelemente 5.1 und 5.2 horizontal oder im Wesentlichen horizontal über das Gelenk 10 aneinander anschließend angeordnet sind (Figuren 2 und 3), in einen Transportzustand überführbar ist, in dem zur Erzielung einer für das Fahren auf öffentlichen Straßen und Wegen verkürzten Gesamtlänge der Vorrichtung 4 die Rahmenelemente 5.1 und 5.2 in eine aufrechte Stellung geschwenkt sind, in der sie in Fahrtrichtung A der Vorrichtung 4 aufeinander folgend mit ihrer Längserstreckung in vertikaler oder annähernd vertikaler Richtung orientiert sind.

Bei der dargestellten Ausführungsform besteht das Gelenk 10 aus einem Lenker 11, der an einem Ende gelenkig mit dem Rahmenelement 5.1 und am anderen Ende gelenkig mit dem Rahmenelement 5.2 verbunden ist, wobei die Gelenkachsen des Gelenks 10 parallel zueinander und parallel zur Radachse 7 orientiert sind. An beiden Enden des Lenkers 11 greift jeweils ein von einem Arbeitszylinder 12 (z.B. Hydraulikzylinder) gebildeter Antrieb an, der zwischen dem Lenker 11 und dem Rahmenelement 5.1 bzw. 5.2 wirkt. Mit den Arbeitszylindern 12 ist eine motorische Änderung der Vorrichtung 4 bzw. des Rahmens 5 zwischen dem Arbeitszustand und dem Transportzustand möglich. Weiterhin ist das Gelenk 10 so ausgebildet, dass es zumindest im Transportzustand blockiert werden kann, um eine starre Verbindung zwischen den Rahmenelementen 5.1 und 5.2 zu erreichen. Bei Ausbildung der Arbeitszylinder 12 als hydraulische Zylinder kann das Blockieren des Gelenks 10 durch die Arbeitszylinder 12 erfolgen.

Im Arbeits/ustand besitzt der Rahmen 4 eine Länge, die wesentlich größer ist als die maximale Breite des Arbeitsfahrzeugs 1. An den beiden Rahmenelementen 5.1 und 5.2 ist in der Nähe des Gelenks 10 jeweils eine Rampe 13 vorgesehen, die mit ihrer Längserstreckung radial zur Längsrichtung des Rahmens 5 bzw. der Rahmenelemente 5.1 und 5.2 orientiert ist, Bei im Arbeitszustand befindlicher Vorrichtung 4 liegen die beiden Rampen 13 auf dem Untergrund UG auf, und zwar in einem gegenseitigen Abstand, der dem Abstand der fahrzeugeigenen Räder 2 an der vorderen und hinteren Radachse des Arbeitsfahrzeugs 1 entspricht. Die beiden Rampenelemente 13 bilden jeweils beidendig einen schräg ansteigenden bzw. abfallenden Rampenabschnitt 13.1 bzw. 13.2, sodass bei im Arbeitszustand befindlicher Vorrichtung 4 und damit bei auf dem Untergrund UG aufliegenden Rampenelementen 13 das Arbeitsfahrzeug 1 senkrecht zur Längserstreckung des Rahmens 5 mit den Rädern jeder Radachse auf die beiden Rampenelemente 13 auffahren und von diesen Rampenelementen wieder herunterfahren kann.

An jedem Rahmenelement 5.1 bzw. 5.2 ist weiterhin ein Schlitten 14 bzw. 15 vorgesehen, der in Längsrichtung des Rahmenelementes durch ein nicht dargestelltes Stellglied, beispielsweise einen Arbeitszylinder (z.B. Hydraulikzylinder) bewegbar ist (Doppelpfeil B). Auf jedem Schlitten ist ein Halter 15 für zwei Räder 3 vorgesehen, und zwar drehbar um eine Achse AD, die bei im Arbeitszustand befindlicher Vorrichtung 4 eine vertikale oder im Wesentlichen vertikale Achse ist und senkrecht zur Längserstreckung des Rahmens 5 bzw. des betreffenden Rahmenelementes 5.1 oder 5.2 orientiert ist. Die beiden Räder 3 an jedem Halter 15 sind bei der dargestellten Ausführungsform achsgleich und mit ihren Achsen radial zur Drehachse AD des jeweiligen Halters 15 orientiert. Zumindest auch während des Transports der Räder 3 mit der Vorrichtung 4 an den Verwendungsort bzw. von dem Verwendungsort sind diese Räder 3 mit ihren Achsen parallel zur Längserstreckung der Rahmenelemente 5.1 und 5.2 orientiert, d.h. bei der dargestellten Ausführungsform in vertikaler oder annähernd vertikaler Richtung. Jeder Schlitten 14 bildet mit seinem zugehörigen Halter 15 eine Radaufnahme 16 für zwei Räder 3. Die beiden jeweils aus dem Schlitten 14 und dem Halter 15 bestehenden Radaufnahmen 16 bilden eine Radaufnahmeanordnung.

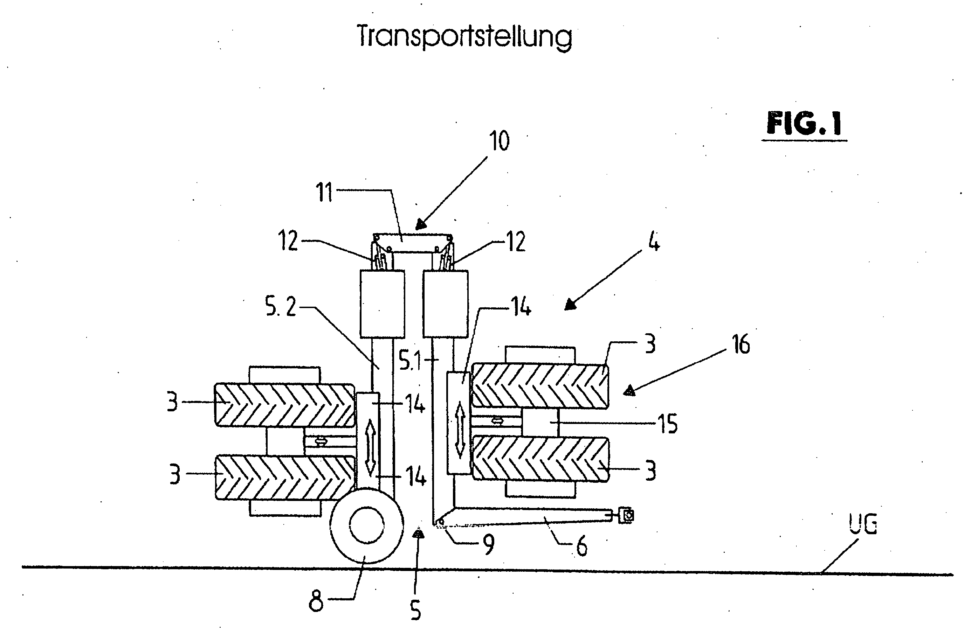

Für das Anbringen der zusätzlichen Räder 3 an die Radachsen des an einem Einsatzort befindlichen Arbeitsfahrzeugs 1 wird die Vorrichtung 4 mit den mit den Rädern 3 bestückten Aufnahmen 16 im Transportzustand (Figur 1) an den Einsatzort bewegt. Im Anschluss daran wird der Rahmen 5 der Vorrichtung 4 in den Arbeitszustand übergeführt, in dem die Rahmenelemente 5.1 und 5.2 über das Gelenk 10 zur Bildung des dann horizontalen oder im Wesentlichen horizontalen Rahmens 5 in Rahmenlängsrichtung L aneinander anschließen und die Rampenelemente 13 jeweils auf dem Untergrund UG aufliegen. In diesem Arbeitszustand sind die an den Haltern 15 gehaltenen Räder 3 mit ihren Achsen in horizontaler Richtung oder annähernd in horizontaler Richtung und parallel zur Längserstreckung des Rahmens 5 orientiert. Das Arbeitsfahrzeug 1 wird dann senkrecht zur Längserstreckung des Rahmens 5 so bewegt (Pfeil C), dass es zunächst mit den Rädern 2 einer Radachse auf den beiden Rampenelementen 13 aufsteht und mit dieser Radachse parallel oder annähernd parallel zur Längserstreckung des Rahmens 5 orientiert ist, wie dies in den Figuren 2 und 3 für die vordere Radachse dargestellt ist. Die innen liegenden, d.h. der Mitte des Rahmens 5 zugewandten Räder 3 werden dann durch entsprechendes Bewegen der beiden Schlitten 14 und gegebenenfalls durch eine Einstellung der Höhenlage der Halter 15 an jeweils ein auf einem Rampenelement 13 aufstehendes fahrzeugeigenes Rad 2 heranbewegt und über eine an dem jeweiligen Rad 3 bzw. an Felge vorgesehene Kupplung, 3.1 (beispielsweise Schnellkupplung) an das fahrzeugeigene Rad 2 angekuppelt, sodass eine Zwillingsradanordnung erhalten wird. Dieses Ankuppeln ist insbesondere dadurch möglich, dass beim Ankuppeln nur das jeweilige fahrzeugeigene Rad 2 auf einem Rampenelement 13 aufsteht, dass zusätzliche Rad 3 beim Heranführen und Ankuppeln ohne Abstützung an der Radunterseite allein an dem zugehörigen Halter 15 gehalten ist, und zwar seitlich von dem jeweiligen Rampenelement 13. Erst beim Herunterfahren von den Rampenelementen 13 kommen auch die an der betreffenden Fahrzeugachse montierten zusätzlichen Räder 3 zur Anlage gegen den Untergrund UG.

Nach dem Montieren der zusätzlichen Räder 3 an einer Fahrzeugachse, beispielsweise an der vorderen Fahrzeugachse wird das Arbeitsfahrzeug 1 so weiterbewegt (Pfeil C), dass es mit den Räder 2 der weiteren Fahrzeugachse auf den Rampenelementen 13 aufsteht. Durch Drehen der Halter 15 um 180° um die Drehachse AD befindet sich dann das weitere, al jedem Halter 15 gehaltene Rad 3 in einer für das Ankoppeln oder Anbringen an der Radachse bereitstehenden Position, sodass wiederum durch Verfahren der Schlitten 14 und gegebenenfalls einer Höheneinstellung die Räder 3 mit ihren Kupplungen 3.1 an die Räder 2 der weiteren Fahrzeugachse angekuppelt werden können.

Das Abnehmen der zusätzlichen Räder 3 von den Fahrzeugachsen des Arbeitsfahrzeugs 1 erfolgt in umgekehrter Weise, d.h. zunächst werden die zusätzlichen Räder 3 von einer auf den Rampenelementen 13 aufstehenden Radachse des Arbeitsfahrzeugs 1 durch Heranbewegen der Halter 15, durch Lösen der Kupplungen 3.1 und durch Wegbewegen der mit den Haltern 15 verbundenen Räder 3 durch Verfahren der Schlitten 14 abgenommen. Anschließend werden die Halter 15 um die Drehachse AD um 180° gedreht, sodass dann mit den Halter 15 in analoger Weise die zusätzlichen Räder 3 der weiteren, nach dem Bewegen des Arbeitsfahrzeugs 1 auf den Rampenelementen 13 aufstehenden Fahrzeugachse entfernt werden können. Das Arbeitsfahrzeug 1 wird dann vollständig von den Rampenelementen 13 herunterbewegt, sodass die Vorrichtung 4 dann beispielsweise zusammen mit den an den Haltern 15 gehaltenen Rädern 13 in den Transportzustand überführt werden kann, um die Räder 3 z.B. an einen weiteren Einsatzort zu transportieren.

Mit der Vorrichtung 4 können die zusätzlichen Räder 3 einfach und Problemlos am jeweiligen Einsatzort des Arbeitsfahrzeugs an die fahrzeugeigenen Räder 2 bzw. an die Fahrzeugachsen angebracht bzw. von den fahrzeugeigenen Rädern oder den Radachsen wieder entfernt werden. Wesentlich hierfür ist u.a., dass die Räder 3 beim Anbringen und Abnehmen an dem jeweiligen Halter 15 gehalten sind, der mit seinem Schotten 14 an das jeweilige fahrzeugeigene Rad 2 heranführbar bzw. von diesem wegbewegbar ist sowie durch eine, beispielsweise einen Hubzylinder, z.B. Hydraulikzylinder aufweisende Hubeinrichtung in vertikaler Richtung, d.h. in Richtung der Drehachse AD in der Höhenlage einstellbar ist. Wesentlich ist weiterhin, dass sowohl beim Anbringen als auch beim Abnehmen das jeweilige Rad 3 ohne weitere Abstützung am Untergrund z.B. an seiner Radfelge am Halter 15 gehalten ist und erst nach dem Herunterfahren in der betreffenden Fahrzeugachse ebenso wie das fahrzeugeigene Rad auf dem Untergrund aufsteht.

Wesentlich ist weiterhin auch, dass die Vorrichtung 4 in dem Transportzustand eine Breite aufweist, die höchstens gleich der maximalen, für das Fahren auf öffentlichen Straßen oder Wegen zulässigen Breite entspricht, vorzugsweise aber kleiner ist als diese maximal zulässige Fahrzeugbreite, und dass der Rahmen 5 im Arbeitszustand zwar eine ausreichend große Länge aufweist, um in der vorbeschriebenen Weise das Anbringen und Abnehmen der Räder 3 mit Hilfe der an den Schlitten 14 vorgesehenen Haltern 15 zu ermöglichen, die Länge des Rahmens 5 aber für den Transportzustand der Vorrichtung 4 deutsch reduziert werden kann.

Wesentlich ist weiterhin auch, dass die Rampenelemente 13 im Arbeitszustand der Vorrichtung 1 auf dem Untergrund UG aufliegen, sodass beim Anbringen und Abnehmen der zusätzlichen Räder 3 der Rahmen 5 nicht von dem Gewicht des Arbeitsfahrzeugs 1 belastet wird.

Die Erfindung wurde voranstehend an einem Ausführungsbeispiel beschrieben. Es versteht sich, dass zahlreiche Änderungen sowie Abwandlungen möglich sind, ohne das dadurch der der Erfindung zugrunde liegende Erfindungsgedanke verlassen wird. So ist es beispielsweise möglich, die Reduzierung der Lange des Rahmens 5 für den Transportzustand auch auf andere Weise zu realisieren, beispielsweise durch einen in Rahmenlängsrichtung teleskopierbaren Rahmen. Weiterhin ist es auch möglich, dass Gelenk 10 anders als vorbeschrieben auszubilden. Weiterhin besteht auch die Möglichkeit, die Vorrichtung 4 mehrachsig auszubilden.

### Bezugszeichenliste

- 1: Arbeitsfahrzeug
- 2: fahrzeugeigene Räder
- 3: zusätzliche Räder
- 4: Vorrichtung zum Anbringen, Abnehmen und Transportieren der Räder 3
- 5: Rahmen
- 5.1,5.2: Rahmenelement
- 6: Zugdeichsel
- 7: Radachse
- 8: Rad
- 9, 10: Gelenk
- 11: Lenker
- 12: Arbeitszylinder
- 13: Rampenelement
- 14: Schlitten
- 15: Halter
- 16: Radaufnahme

- A: Fahrtrichtung der Vorrichtung
- B: Bewegung der Schlitten 14
- C: Fahrtrichtung des Arbeitsfahrzeugs

- L: Längserstreckung des Rahmens 5
- AD: Drehachse
- UG: Untergrund

## Patentansprüche

1. Vorrichtung zum Montieren und Demontieren von zusätzlichen Fahrzeugrädern (3) an Arbeitsfahrzeugen (1), mit wenigstens einer Radaufnahmeanordnung (16) an einem Rahmen (5) für wenigstens zwei zusätzliche Fahrzeugräder (3), die in einem Arbeitszustand der Vorrichtung (4) mit der Radaufnahmeanordnung (16) an ein in einer Montageposition befindliches fahrzeugseitiges Fahrzeugrad (2) ankuppelbar bzw. von diesem abnehmbar sind, wobei die Radaufnahmeanordnung wenigstens eine Radaufnahme (16) aufweist, die relativ zu der Montageposition (13) am Rahmen (5) bewegbar vorgesehen ist, vorzugsweise in einer horizontalen oder annähernd horizontalen Achsrichtung
**dadurch gekennzeichnet,**
**dass** die Vorrichtung als eigenständige fahrbare Vorrichtung (4) mit einem wenigstens eine Radachse (7) mit eigenen Laufrädern (8) aufweisenden Rahmen (5) ausgebildet ist.

2. Vorrichtung nach Anspruch i, **dadurch gekennzeichnet, dass** die wenigstens eine Radaufnahme (16) einen Halter (15) für wenigstens ein, vorzugsweise für wenigstens zwei zusätzliche Räder (3) aufweist.

3. Vorrichtung nach einem der vorhergehenden Ansprüche, **dadurch gekennzeichnet, dass** die wenigstens eine Radaufnahme (16) oder deren Halter (15) für ein Halten der zusätzlichen Räder (3) an ihren Radfelgen und/oder für ein freies Halten der zusätzlichen Räder (3) ausgebildet sind ausgebildet sind.

4. Vorrichtung nach einem der vorhergehenden Ansprüche, **dadurch gekennzeichnet, dass** das jeweilige zusätzliche Rad (3) an der Radaufnahme (16) oder an dem Halter (15) dieser Aufnahme frei gehalten bzw. entlastet an das fahrzeugeigene Rad (2) ankuppelbar bzw. von diesem abnehmbar ist.

5. Vorrichtung nach einem der vorhergehenden Ansprüche, **gekennzeichnet durch** wenigsten eine die Arbeitsposition definierende Standfläche (13) am Rahmen (5) für das jeweilige in der Arbeitsposition befindliche fahrzeugeigene Rad (2).

6. Vorrichtung nach einem der vorhergehenden Ansprüche, **dadurch gekennzeichnet, dass** im Arbeitszustand der Vorrichtung sich die wenigstens eine Standfläche (13) auf dem Untergrund (UG) abstützt,
und/oder
dass die wenigstens eine Standfläche (13) von wenigstens einem, beilspielsweise von zwei Rampenelementen (13) gebildet ist.

7. Vorrichtung nach einem der vorhergehenden Ansprüche, **dadurch gekennzeichnet, dass** sie bein Anbringen oder Abnehmen des jeweiligen zusätzlichen Rades (3) mit ihrer Längserstreckung (L), beispielsweise mit der Längserstreckung ihres Rahmens (5) parallel oder im Wesentlichen parallel zu der betreffenden Fahrzeugachse des Arbeitsfahrzeugs (1) orientiert ist.

8. Vorrichtung nach einem der vorhergehenden Ansprüche, **dadurch gekennzeichnet, dass** am Rahmen (5) der Vorrichtung (4) beidseitig von wenigstens einer Standfläche (13) für zwei an einer gemeinsamen Fahrzeugachse des Fahrzeugs (1) vorgesehene fahrzeugeigene Rädern (2) jeweils eine Radaufnahme (16) vorgesehen ist.

9. Vorrichtung nach einem der vorhergehenden Ansprüche, **dadurch gekennzeichnet, dass** die wenigstens eine Radaufnahme (16) auf die Montageposition oder auf die diese Montageposition bildende Stantdfläche (13) zu bewegbar und von dieser Montageposition bzw. Standfläche wegbewegbar ist.

10. Vorrichtung nach einem der vorhergehenden Ansprüche, **dadurch gekennzeichnet, dass** der Halter (15) der wenigstens einen Radaufnahme (16) für die Aufnahme von zwei mit ihren Achsen parallel zueinander und vorzugsweise achsgleich miteinander angeordneten zusätzlichen Räder (3) ausgebildet ist.

11. Vorrichtung nach einem der vorhergehenden Ansprüche, **dadurch gekennzeichnet,**
**dass** an einem Ende des Rahmens (5) eine Zugdeichsel (6) zum Ankoppeln an ein Zugfahrzeug vorgesehen ist,
und/oder
**dass** der Rahmen (5) der Vorrichtung (4) in seiner effektiven Lange veränderbar ist, beispielsweise durch Klappen oder durch Teleskoppieren.

12. Vorrichtung nach Anspruch 12, **dadurch gekennzeichnet, dass** der Rahmen (5) aus wenigstens zwei gelenkig miteinander verbundenen Rahmenelementen (5.1, 5.2) besteht, die bei im Arbeitszustand befindlicher Vorrichtung (4) in Rahmentangsrichtung (L) aneinander anschließen und bei im Transportzustand befindlicher Vorrichtung quer zur Längsrichtung der Vorrichtung (4), bleispieisweise in vertikaler Richtung oder annähernd in vertikaler Richtung orientiert sind.

## Claims

1. Device for fitting and dismantling additional vehicle wheels (3) on work vehicles (1), with at least one wheel mount assembly (16) on a frame (5) for at least two additional vehicle wheels (3) which in a working position of the device (4) can be coupled to and removed from the wheel mount assembly (16) on a vehicle-side wheel (2) located in an assembly position, wherein the wheel mount assembly has at least one wheel mount (16) which is provided movable relative to the fitting position (13) on the frame (5), preferably in a horizontal or approximately horizontal axial direction, **characterised in that** the device is designed as an independent mobile device (4) with a frame having at least one wheel axle (7) with its own rollers (8).

2. Device according to claim 1, **characterised in that** the at least one wheel mount (16) has a holder (15) for at least one, preferably for at least two additional wheels (3).

3. Device according to one of the preceding claims **characterised in that** the at least one wheel mount (16) or its holder (15) is designed for holding the additional wheels (3) on their wheel rims and/or for holding the additional wheels (3) free.

4. Device according to one of the preceding claims **characterised in that** each additional wheel (3) is held freely on the wheel mount (16) or on the holder (15) of this mount and released can be coupled to or removed from the vehicle's own wheel (2).

5. Device according to one of the preceding claims **characterised by** at least a stand face (13) on the frame (5) defining the work position for the vehicle's own wheel (2) located in the work position.

6. Device according to one of the preceding claims **characterised in that** in the working position of the device the at least one stand face (13) is supported on the ground (UG),and/or that the at least one stand face (13) is formed by at least one, by way of example two, ramp elements (13).

7. Device according to one of the preceding claims **characterised in that** when attaching or removing each additional wheel (3) it is aligned with its longitudinal, extension (L), by way of example with the longitudinal extension of its frame (5) parallel or substantially parallel to the relevant vehicle axle of the work vehicle (1).

8. Device according to one of the preceding claims **characterised in that** a wheel mount (16) is provided on the frame (5) of the device (4) on each side of at least one stand (13) for two of the vehicle's own wheels (2) which are provided on a common vehicle axle of the vehicle (1).

9. Device according to one of the preceding claims, **characterised in that** the at least one wheel mount (16) can be moved up to the fitting position or to a stand face (13) forming this fitting position and can be moved away from this fitting position or stand face.

10. Device according to one of the preceding claims, **characterised in that** the holder (15) of the at least one wheel mount (16) is designed for holding two additional wheels (3) mounted with their axles parallel to one another and preferably coaxial with one another.

11. Device according to one of the preceding claims **characterised in that** at the end of the frame (5) there is a tow bar (6) for coupling to a tow vehicle, and/or that the frame (5) of the device (4) is adjustable in its effective length, by way of example by folding or telescopic movement.

12. Device according to claim 12 **characterised in that** the frame (5) consists of at least two frame elements (5.1, 5.2) connected to one another for articulated movement and which with the device (4) in the work position adjoin one another in the longitudinal direction (L) of the frame and with the device in the transport position are aligned transversely to the longitudinal direction of the device (4), by way of example in the vertical direction or approximately in the vertical direction.

## Revendications

1. Dispositif de montage et de démontage de roues de véhicule supplémentaires (3) sur des véhicules de travail (1), comportant au moins un ensemble de logements de roues ((16) sur un châssis (5) pour au moins deux roues de véhicule supplémentaires (3) qui peuvent, dans un état de travail du dispositif (4), avec l'ensemble de logements de roues (16), être couplées à une roue de véhicule (2) se trouvant dans une position de montage sur le véhicule ou être écartées de celle-ci, dans lequel l'ensemble de logements de roue présente au moins un logement de roue (16) qui est prévu pour être mobile sur le châssis (5) par rapport à la position de montage (13), de préférence dans une direction axiale horizontale ou à peu près horizontale, **caractérisé en ce que** le dispositif se présente sous la forme d'un dispositif déplaçable autonome (4) avec un châssis (5) présentant au moins un essieu (7) avec ses roues propres (8).

2. Dispositif selon la revendication 1, **caractérisé en ce que** ledit au moins un logement de roue (16) présente un support (15) pour au moins une roue supplémentaire (3), de préférence pour au moins deux roues supplémentaires (3).

3. Dispositif selon l'une quelconque des revendications précédentes, **caractérisé en ce que** ledit au moins un logement de roue (16) ou son support (15) sont réalisés de façon à supporter les roues supplémentaires (3) sur leurs jantes et/ou de façon à supporter librement les roues supplémentaires (3).

4. Dispositif selon l'une quelconque des revendications précédentes, **caractérisé en ce que** la roue supplémentaire respective (3) est supportée librement sur le logement de roue (16) ou sur le support (15) de ce logement ou peut être, sans charge, couplée à la roue fixée au véhicule (2) ou écartée de celle-ci.

5. Dispositif selon l'une quelconque des revendications précédentes, **caractérisé par** au moins une surface d'appui (13) définissant la position de travail, prévue sur le châssis (5) pour chaque roue fixée au véhicule (2) se trouvant dans la position de travail.

6. Dispositif selon l'une quelconque des revendications précédentes, **caractérisé en ce que**, dans l'état de travail du dispositif, ladite au moins une surface d'appui (13) prend appui sur le sol (UG) et/ou en ce que ladite au moins une surface d'appui (13) est formée par au moins un, par exemple par deux éléments de rampe (13).

7. Dispositif selon l'une quelconque des revendications précédentes, **caractérisé en ce que**, lors du placement ou de l'enlèvement de la roue supplémentaire respective (3), il est orienté avec son extension longitudinale (L), par exemple avec l'extension longitudinale de son châssis (5), parallèlement ou sensiblement parallèlement à l'essieu concerné du véhicule de travail (1).

8. Dispositif selon l'une quelconque des revendications précédentes, **caractérisé en ce qu'**il est prévu sur le châssis (5) du dispositif (4) chaque fois un logement de roue (16), de part et d'autre d'au moins une surface d'appui (13) pour deux roues fixées au véhicule (2) prévues sur un essieu commun du véhicule (1).

9. Dispositif selon l'une quelconque des revendications précédentes, **caractérisé en ce que** ledit au moins un logement de roue (16) peut être déplacé sur la position de montage ou sur la surface d'appui (13) formant cette position de montage ou être écarté de cette position de montage ou de cette surface d'appui.

10. Dispositif selon l'une quelconque des revendications précédentes, **caractérisé en ce que** le support (15) dudit au moins un logement de roue (16) est réalisé de façon à recevoir deux roues supplémentaires (3) disposées avec leurs axes parallèles l'un à l'autre et de préférence avec leurs axes coïncidant l'un avec l'autre.

11. Dispositif selon l'une quelconque des revendications précédentes, **caractérisé en ce qu'**il est prévu à une extrémité du châssis (5) un timon de traction (6) à atteler à un véhicule de traction et/ou **en ce que** le châssis (5) du dispositif (4) présente une longueur effective modifiable, par exemple par rabattement ou coulissement télescopique.

12. Dispositif selon la revendication 11, **caractérisé en ce que** le châssis (5) se compose d'au moins deux éléments de châssis (5.1, 5.2) reliés l'un à l'autre de manière articulée qui, lorsque le dispositif (4) se trouve dans son état de travail, se raccordent l'un à l'autre dans la direction longitudinale (L) du châssis et, lorsque le dispositif se trouve dans son état de transport, sont orientés transversalement à la direction longitudinale du dispositif (4), par exemple en direction verticale ou à peu près en direction verticale.
